# FASCICULE DE BREVET EUROPEEN

(11) **EP 2 227 669 B1**
(45) Date de publication et mention de la délivrance du brevet: **08.08.2018**
(21) Numéro de dépôt: 08866736.5
(22) Date de dépôt: 26.12.2008
(51) Int. Cl.: G01B 7/16

(54) **DISPOSITIF DE TEST DE STRUCTURE D'AVION, DU TYPE COUPE FIL**
DRAHTSCHERENARTIGES TESTGERÄT FÜR FLUGZEUGSTRUKTUR
AIRCRAFT STRUCTURE TEST DEVICE OF THE WIRE CUTTER TYPE

(30) Priorité: 03.01.2008 FR 0850017
(43) Date de publication de la demande: 15.09.2010
(73) Titulaire: AIRBUS (SAS), 31700 Blagnac (FR)
(72) Inventeur: ROLET, Sébastien, F-31830 Plaisance du Touch (FR); DOMINGUEZ, Nicolas, F-31170 Tournefeuille (FR)
(74) Mandataire: Gicquel, Olivier Yves Gérard
(86) Numéro de dépôt international: PCT/FR2008/052421
(87) Numéro de publication internationale: WO 2009/083699

(56) Documents cités:
- EP-A- 0 874 214
- DE-A1- 19 534 677
- FR-A- 2 728 677
- SU-A1- 932 210
- SU-A2- 1 073 559
- US-A- 5 969 260
- US-A1- 2005 284 232

## Description

L'invention se rapporte aux dispositifs de test de structure d'avion, du type coupe fil. Elle porte sur les opérations de contrôle non destructif, en maintenance, par exemple dans le domaine aéronautique, typiquement du lieu de jonctions de structures d'avion, par exemple entre des viroles du fuselage et des raidisseurs longitudinaux.

La détection de fissures de fatigue sur structures aéronautiques est une opération de maintenance extrêmement coûteuse lorsque la partie à inspecter n'est pas accessible facilement et nécessite des opérations de démontage. Une solution actuelle consiste en un contrôle manuel par courants de Foucault d'une surface d'initiation de la crique, ce qui nécessite le démontage de certains éléments de structure. Le problème est donc de détecter l'apparition de criques de fatigue et d'en déterminer la longueur et la position sans recourir à des opérations de démontage.

Des capteurs préalablement installés, par exemple de type coupe fil ou à courants de Foucault, voire par détection acoustique, contribuent à réduire ces coûts puisqu'ils évitent le démontage de l'entourage d'une pièce à surveiller lors des contrôles. Chaque technologie présente cependant des avantages et des inconvénients.

Un détecteur de type coupe fil utilise un fil conducteur électrique collé sur une surface d'initiation de la fissure. Ce détecteur permet de détecter l'apparition d'une crique, ou non, en testant la continuité électrique du fil conducteur. Le fil se coupe lorsque la crique se propage là où il est collé. Cette solution présente l'inconvénient de donner une indication binaire et ne permet ni d'estimer la longueur de la crique, ni de la positionner puisque la rupture est susceptible de s'être produite à n'importe quel endroit sur la longueur du fil conducteur.

Il est connu de l'état de la technique le document DE 19534677(A1), ce document concerne un dispositif de détection de fuites, en particulier de fuites dans une couche d'isolation, par exemple sous une décharge pour déchets industriels, déchets ménagers, dépôts de dragage pollués et analogues, ou par exemple sous un réservoir à liquides.

Il est également connu de l'état de la technique la demande de brevet français FR 27287677(A) et la demande de brevet européen EP 0874214(A), ces documents concerne chacun un procédé de détection de déformations d'un ouvrage de génie civil. Enfin il est connu de l'état de la technique la demande de brevet soviétique 1073559(A2).

Il est également connu de l'état de la technique les demandes US 5 969 260A, SU 932 210 A1, et US 2005/284232 qui divulguent un détecteur de défauts, et un système de contrôle de structures composite.

L'invention utilise le principe du coupe fil, l'innovation résidant dans le dessin de celui-ci, qui permet en particulier d'estimer à la fois la longueur de la fissure et sa position. Selon ce nouveau dessin, au lieu d'avoir un fil dans le coupe fil, on dispose de nombreux fils connectés en deux réseaux. Les deux réseaux peuvent être par ailleurs connectés entre eux pour des raisons de simplification. Les réseaux forment alors un maillage, de préférence perpendiculaire, permettant de localiser précisément la détérioration.

L'invention a donc pour objet une structure d'avion selon la revendication 1. Les revendications 2 à 4 portent sur des aspects particuliers de l'invention. L'invention sera mieux comprise à la lecture de la description qui suit et à l'examen des figures qui l'accompagnent. Celles-ci ne sont présentées qu'à titre indicatif et nullement limitatif de l'invention. Les figures montrent:
Figure 1: un dispositif non revendiqué avec une géométrie matricielle de coupe fil;
Figure 2: un dispositif selon l'invention avec une géométrie de coupe fil en peigne.

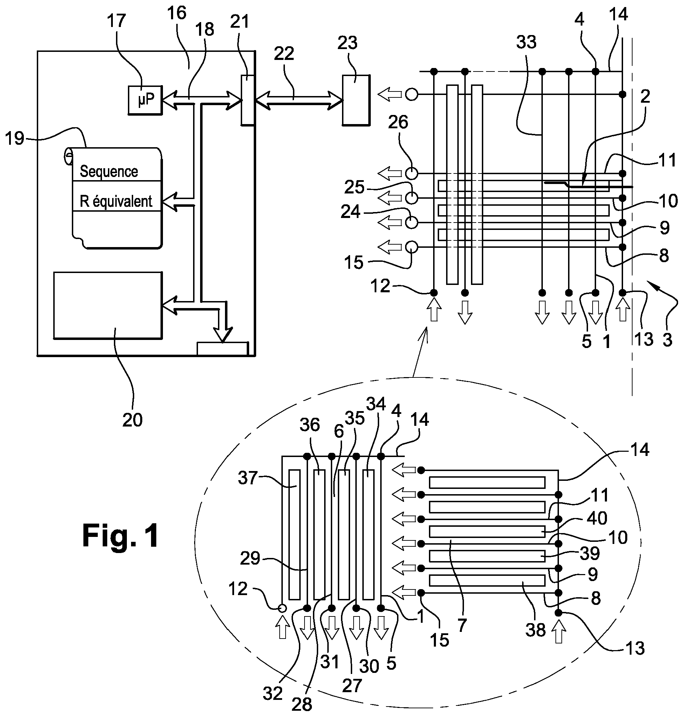

La figure 1 représente un dispositif qui n'appartient pas à l'invention. Celui-ci comporte un fil conducteur, par exemple le fil 1 solidaire d'une structure à surveiller. La structure, non montrée, est par exemple plane. Mais elle pourrait être un redan ou une arête d'une cornière, voire un bossage ou autre. Le fil conducteur 1 est fixé en pratique sur un support, par exemple une nappe en polytetrafluoroéthylène, métallisée sur une face, et gravée pour laisser présent le fil conducteur 1. Cette nappe est alors collée fermement sur la structure de telle façon qu'elle en suive toutes les évolutions. Notamment une fissure 2 se propageant dans la structure, par exemple à partir d'une arête 3 de cette structure, a pour effet de rompre le fil 1.

Pour détecter la rupture, le fil 1 est alimenté électriquement à une extrémité 4 par une tension et / ou un courant électrique. Une autre extrémité 5 restitue cette tension et / ou ce courant par conduction électrique. L'inconvénient présenté par un tel dispositif est que la localisation de la fissure à un endroit particulier du fil 1 n'est pas possible. La lecture de la tension disponible en 5 renseigne seulement d'une manière binaire sur la présence ou l'absence de la fissure 2. Le dispositif comporte deux réseaux de fils: les réseaux 6 et 7, montrés séparément sur un agrandissement d'un détail de la figure 1. Les deux réseaux sont en fait collés l'un sur l'autre, et, ensemble, collés solidairement sur la structure à surveiller. Les deux réseaux forment alors un maillage. Sur cette structure, ces deux réseaux s'étendent, chacun sur son support plan, dans une direction de l'espace, différente de celle selon laquelle s'étend l'autre réseau. Ainsi le réseau 6 s'étend dans une direction, montrée ici horizontale sur la figure1, perpendiculairement à la direction de ses fils conducteurs tels que 1. Les fils conducteurs d'un réseau sont parallèles entre eux. Pour le réseau 1, ils sont tous parallèles au fil 1. Le réseau 7 s'étend dans une direction, ici verticale, perpendiculaire à la direction de ses fils conducteurs, ou au moins perpendiculairement à des portions 8 à 11 de ces fils conducteurs qui sont parallèles entre elles. Les portions sont parallèles entre elles et sont perpendiculaires à la direction d'extension du réseau 7.

Les supports sont solidaires de la structure qui les porte et subissent avec elle les déformations et ruptures que cette dernière subit.

Alors que le réseau 6 est alimenté par une alimentation électrique de réseau par une borne 12, le réseau 7 est alimenté par une borne 13 de réseau, distincte de la borne 12. De ce fait les deux réseaux sont alimentés distinctement. Par alimentation distincte, on n'entend pas nécessairement une tension, ou une forme d'onde électrique différente. Mais aussi éventuellement et de préférence, une alimentation en partage de temps. Notamment dans ce dernier cas, préféré, les deux réseaux peuvent être reliés entre eux par une borne commune 14.

Les réseaux sont formés de telle façon que chaque fil d'un réseau de fils est connecté à l'alimentation électrique de réseau du réseau auquel il appartient. Ainsi tous les fils 8 à 11 du réseau 7 sont reliés à la borne 13. Sur les dessins des réseaux, lorsque des connexions électriques sont réalisées, des points aux intersections des fils matérialisent ces connexions. Ainsi chaque réseau peut comporter une connexion générale orientée comme le sens d'extension du réseau sur laquelle viennent s'embrancher progressivement tous les fils conducteurs du réseau.

Alors que les deux réseaux s'étendent en nappes, avec des portions de fils parallèles, les portions de fils d'un réseau sont orientées dans une direction orthogonale à celle des portions de l'autre réseau. Dans un mode de fonctionnement, la continuité électrique du point d'injection, 12 ou 13, à chacune des bornes de lecture telles que 5 pour le réseau 6, ou respectivement 15 pour le réseau 7, peut être testée séquentiellement de manière à déterminer la position de la crique. Dans ce but, le dispositif comporte, ou est associé à, un circuit électronique 16 muni d'un microprocesseur 17 relié par un bus 18 d'adresses, de données et de commandes à une mémoire programme 19, à une mémoire de données 20 (pour enregistrer des résultats de mesure), et à une interface 21 d'entrées sorties. L'interface 21 est en communication avec un bus de transport 22 (typiquement un bus avion). Le bus 22 est relié à un décodeur 23 situé à proximité ou sur le support des réseaux 6 et 7. Le décodeur 23 est relié d'une part au bus 22, et d'autre part aux bornes 12 et 13 d'injection, et aux bornes telles que 5 et 15 de lecture. Sous l'action du processeur 17, le décodeur 23 sert à solliciter successivement, voire simultanément mais séparément, les connexions de restitution.

Lorsqu'un réseau est alimenté, la méthode permet de déterminer un intervalle entre deux fils dans lequel se situe la crique 2. En effet, par exemple pour le réseau 7, la position de la crique 2 ne gène pas le passage du courant entre la borne 13 et la borne 15, ni non plus entre la borne 13 et la borne 24 ou la borne 25 des fils conducteurs 8 et 9 les plus proches du fil 8. Par contre la borne 26 alimentée par le fil 11 ne reçoit plus de courant puisque la fissure s'étendant depuis le bord 3 a rompu la connexion générale d'alimentation du réseau 7 entre la connexion du fil 10 et celle du fil 11.

Dans le cas du réseau 7, ce qui importe au premier chef est que la connexion générale soit bien entraînée par la structure qu'elle est censée surveiller. C'est cette connexion générale qui rend compte de la rupture en étant elle-même rompue. Il est aussi possible que les fils 8 à 11 ne soient eux mêmes pas soumis à la contrainte. Par exemple à leur endroit, le support n'est pas collé sur la structure.

Autant avec le réseau 7 on peut ainsi déterminer la position de la fissure 2 (entre les fils 10 et 11), autant avec le réseau 6 il est possible de connaître son extension, sa longueur. En effet, le fil conducteur 1 qui prend place entre la borne 4 et la borne 5 sera le premier coupé par la fissure 2. Il suffit alors de connaître parmi les fils 1 et 27 à 29 du réseau 6 quel est le premier qui donne une réponse pour mesurer la longueur de la fissure. De la même manière, la continuité du point d'injection 12 à chacun des points de lecture 30 à 32 est testée séquentiellement de façon à déterminer la longueur de la crique (en fait un intervalle de longueur). Dans le cas du réseau 6, la connexion générale qui mène aux connexions particulières n'est pas (ne doit de préférence pas être) coupée. Seule sont susceptibles d'être coupées les connexions particulières 1 et 27 à 29.

Un tel dispositif nécessite alors, lors de son application sur la structure à l'endroit à surveiller, que le bord d'attaque de la fissure, le bord 3 soit parallèle à la connexion générale du réseau 7 et aux connexions particulières du réseau 6. Si la fissure doit se propager dans une autre direction, il convient que ces dernières connexions générales et particulières lui soient perpendiculaires.

Autrement, si le sens de propagation de la fissure est inconnu, ou si tous les fils conducteurs sont entraîné par la fissure, on peut quand même savoir par le dernier fil alimenté 10 du réseau 7 et le dernier fil alimenté 33 du réseau 6 quelles sont les limites de cette fissure 2.

Dans un autre mode de fonctionnement, les bornes de lecture telles que 5 et 30 à 32, ou telles que 15 et 24 à 26 peuvent être reliées entre elles, par exemple par un conducteur électrique ou par le décodeur 23. De telles connexions donnent ainsi lieu à deux circuits électriques indépendants, l'un servant à la détermination de la position avec le réseau 7, l'autre à la détermination de la longueur de la crique avec le réseau 6. C'est alors la résistance des circuits électriques ainsi constitués qui est modifiée lorsqu'une partie des fils est coupée. En effet chaque fil conducteur présente une résistance électrique en parallèle de celle des autres fils conducteurs.

Si on appelle R1, R2, RN les résistances de chacun des fils conducteurs, la résistance équivalente notée R d'un tel circuit à N fils est telle que 1/R = 1/R1 +1/R2 + ...+1/RN. Si les fils 1 à k sont coupés par la fissure, alors la résistance R du circuit devient telle que 1/R = 1/Rk+1 +1/Rk+2 + ... +1/RN. La mesure de la résistance globale du circuit donne ainsi accès au nombre de fils coupés et donc à la longueur, ou respectivement à la position de la fissure.

Selon la méthode utilisée, le microprocesseur 17 mettra en oeuvre un programme de mesures séquentielles ou de mesure de résistance équivalente.

Les pistes ou fils électriques peuvent être supportées par un substrat souple de type pellicule de polytetrafluoroéthylène métallisé ou directement déposées sur la surface de la pièce. De préférence, le substrat souple et les pistes ont une déformation maximale supérieure à celle du matériau de la structure surveillée, ceci afin d'éviter une rupture de piste avant la propagation de fissure sous celle-ci.

Dans le cas d'une solution de type substrat souple, il est aussi envisageable que les différentes pistes soient chacune disposée sur un support indépendant, ou sur un support unique découpé en lamelles afin d'éviter la section de fils par transmission élastique des déplacements sur le support souple, ce qui pourrait entraîner une mesure erronée de la longueur ou position de la fissure.

Par exemple, sur le détail, on distingue entre les connexions particulières1, 27, 28, 29, et la connexion générale des entailles allongées 34 à 37. Ces entailles 34-37 sont allongées parallèlement aux connexions 1 et 27 à 29. De même, les entailles 38 à 40 prennent place entre les connexions particulière du deuxième réseau 7. Ces entailles ne s'étendent pas jusqu'à la connexion, générale ou particulière qui est destinée à détecter la fissure

Cette solution de coupe fil prend tout son intérêt si le dispositif peut être interrogé à distance, même sans fil par exemple sans le bus 22, ce qui permet d'éviter de démonter la pièce. Cependant, l'invention porte essentiellement sur le dessin du dispositif indépendamment de la technique utilisée pour l'interroger.

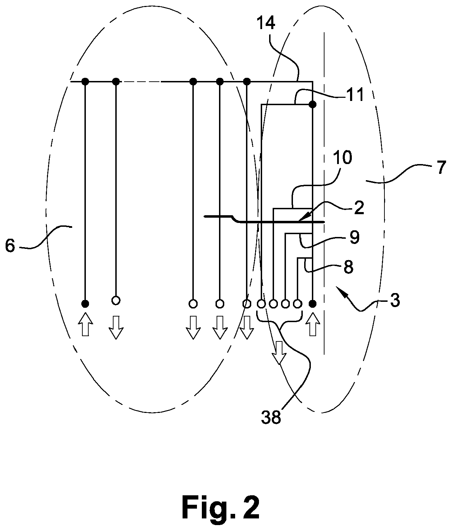

Dans les deux configurations géométriques des figures 1 et 2, les espacements horizontaux et verticaux entre les fils peuvent être adaptés à l'application visée (dimensions de la pièce, longueur de fissure critique, ...).

La figure 2 montre le dispositif de l'invention. Selon cette forme, en peigne, les deux réseaux sont juxtaposés côte à côte sur la surface à surveiller au lieu d"être superposés comme sur la figure 1. Le point de connexion 14 peut être maintenu. Le réseau 7 est placé à proximité immédiate du lieu 3 attendu pour la fissure. Dans ce cas, les connexions utiles du réseau 7 comportent des portions parallèles 8 à 11 reliées, par des coudes et des connexions en retour perpendiculaires, à un ensemble 38 de bornes alignées avec les bornes des connexions de lecture du réseau 6. Dans ce dispositif, comme dans celui de la figure 1, les connexions peuvent être lues séquentiellement ou en parallèle, en mesurant alors la résistance équivalente. Dans le cas de la figure 2, les connexions en retour ne sont de préférence pas coupables. Elles sont par exemple portées par une partie du support non collée sur la structure à surveiller.

## Revendications

1. Structure d'avion comportant un détecteur coupe fil, ledit détecteur comportant un fil conducteur (1) solidaire mécaniquement de la structure d'avion à surveiller, ledit fil conducteur étant alimenté électriquement à une extrémité (4) et restituant à une autre extrémité (5) un courant et/ou une tension électrique correspondant à l'alimentation, si la structure d'avion à surveiller n'a pas subi de détérioration inacceptable, **caractérisé en ce que** ledit détecteur comporte :
- deux réseaux (6, 7) de fils conducteurs s'étendant respectivement sur un support plan dans une direction de l'espace différente de celle selon laquelle s'étend l'autre réseau,
- les supports étant solidaires de la structure d'avion de sorte à subir les déformations et les ruptures de ladite structure d'avion,
- un réseau (6) étant alimenté par une alimentation électrique de réseau par une borne (12), et l'autre réseau (7) étant alimenté par une alimentation électrique de réseau par une borne distincte (13), de sorte que les deux réseaux sont alimentés distinctement,
- tous les fils d'un réseau (6, 7) de fils étant connectés à l'alimentation électrique de réseau auquel ils appartiennent,
- les deux réseaux (6, 7) s'étendant en nappes, avec des portions de fils parallèles,
- des portions de fils (8, 9, 10, 11) d'un réseau (6, 7) étant orientées dans une direction orthogonale à celle des portions de l'autre réseau (1, 27, 28, 29),
- les deux réseaux (6, 7) formant un motif en peigne dans lequel des connexions utiles d'un réseau (6) comportent des portions parallèles (1, 27, 28 et 29) et dans lequel des connexions utiles de l'autre réseau (7) comportent des portions parallèles (8, 9, 10, 11) reliées, par des coudes et des connexions en retour perpendiculaires, à un ensemble (38) de bornes alignées avec les bornes des connexions de lecture de l'autre réseau (6),
de sorte à estimer la longueur et la position de la déformation ou de la rupture de la structure d'avion, en cas de coupure d'au moins une des portions de fils; et,
le détecteur coupe fil comportant en outre :
- une mise en connexion en parallèle des fils conducteurs d'un réseau,
- un microprocesseur (17) et une mémoire programme (19) mesurant, successivement dans le temps, des potentiels et/ou courants électriques disponibles sur chacun des fils conducteurs d'un réseau mis en service,
- un décodeur (23) commandé par le microprocesseur (17),
- le microprocesseur (17) mettant en oeuvre un programme de mesure de la résistance équivalente, pour en déduire la position de la détérioration.

2. Structure d'avion selon la revendication 1, **caractérisé en ce qu'**elle comporte une nappe en polytetrafluoroéthylène métallisée sur une face, et gravée en correspondance de la définition d'un réseau de portions fils.

3. Structure d'avion selon l'une des revendications 1 à 2, **caractérisé en ce qu'**elle comporte
- pour un réseau un support unique découpé en lamelles.

4. Structure d'avion selon l'une des revendications 1 à 3, **caractérisé en ce que** les deux réseaux sont interconnectés ensemble.

## Patentansprüche

1. Flugzeugstruktur, welche einen Drahtbruchdetektor umfasst, wobei dieser Detektor einen leitfähigen Draht (1) umfasst, der mit der zu überwachenden Flugzeugstruktur mechanisch fest verbunden ist, wobei der leitfähige Draht an einem Ende (4) mit Strom versorgt wird und an einem anderen Ende (5) einen Strom und/oder eine elektrische Spannung abgibt, welche(r) der Einspeisung entspricht, falls die zu überwachende Flugzeugstruktur keine inakzeptable Beschädigung erfahren hat, **dadurch gekennzeichnet, dass** der Detektor umfasst:
- zwei Netze (6, 7) von leitfähigen Drähten, die sich jeweils auf einem ebenen Träger in einer räumlichen Richtung erstrecken, die von derjenigen, in der sich das andere Netz erstreckt, verschieden ist,
- wobei die Träger mit der Flugzeugstruktur fest verbunden sind, so dass sie die Verformungen und die Brüche der Flugzeugstruktur erfahren,
- wobei ein Netz (6) von einer Netzstromversorgung über einen Anschluss (12) gespeist wird und das andere Netz (7) von einer Netzstromversorgung über einen anderen Anschluss (13) gespeist wird, so dass die zwei Netze getrennt gespeist werden,
- wobei alle Drähte eines Netzes (6, 7) von Drähten mit der Netzstromversorgung verbunden sind, zu der sie gehören,
- wobei sich die zwei Netze (6, 7) in Lagen erstrecken, mit parallelen Abschnitten von Drähten,
- wobei Abschnitte von Drähten (8, 9, 10, 11) eines Netzes (6, 7) in einer Richtung verlaufen, die zu derjenigen der Abschnitte des anderen Netzes (1, 27, 28, 29) orthogonal ist,
- wobei die zwei Netze (6, 7) ein kammförmiges Muster bilden, in welchem Nutzverbindungen eines Netzes (6) parallele Abschnitte (1, 27, 28 und 29) umfassen und in welchem Nutzverbindungen des anderen Netzes (7) parallele Abschnitte (8, 9, 10, 11) umfassen, die über Knickpunkte und senkrechte Rückverbindungen mit einem Satz (38) von Anschlüssen verbunden sind, die zu den Anschlüssen der Ableseverbindungen des anderen Netzes (6) ausgerichtet sind,
um im Falle einer Unterbrechung wenigstens eines der Abschnitte von Drähten die Länge und die Position der Verformung oder des Bruches der Flugzeugstruktur zu schätzen; und
wobei der Drahtbruchdetektor außerdem umfasst:
- eine Parallelschaltung der leitfähigen Drähte eines Netzes,
- einen Mikroprozessor (17) und einen Programmspeicher (19), die zeitlich aufeinanderfolgend elektrische Potentiale und/oder Ströme messen, die an jedem der leitfähigen Drähte eines in Betrieb genommenen Netzes verfügbar sind,
- einen Decoder (23), der von dem Mikroprozessor (17) gesteuert wird,
- wobei der Mikroprozessor (17) ein Programm zur Messung des äquivalenten Widerstands durchführt, um daraus die Position der Beschädigung abzuleiten.

2. Flugzeugstruktur nach Anspruch 1, **dadurch gekennzeichnet, dass** sie eine Lage aus Polytetrafluorethylen umfasst, die auf einer Seite metallisiert ist und entsprechend der Definition eines Netzes von Drahtabschnitten geätzt ist.

3. Flugzeugstruktur nach einem der Ansprüche 1 bis 2, **dadurch gekennzeichnet, dass** sie umfasst:
- für ein Netz einen einzigen Träger, der in Lamellen zerschnitten ist.

4. Flugzeugstruktur nach einem der Ansprüche 1 bis 3, **dadurch gekennzeichnet, dass** die zwei Netze miteinander verbunden sind.

## Claims

1. Aeroplane structure comprising a cut wire detector, said detector comprising a conductor wire (1) mechanically secured to the aeroplane structure to be monitored, said conductor wire being fed electrically at one end (4) and restoring, at another end (5), a current and/or an electrical voltage corresponding to the power supply, if the aeroplane structure to be monitored has not undergone unacceptable deterioration, **characterized in that** said detector comprises:
- two networks (6, 7) of conductor wires extending respectively on a planar support in a direction of space different from that in which the other network extends,
- the support being secured to the aeroplane structure so as to undergo the deformations and the breaks of said aeroplane structure,
- one network (6) being powered by a mains electrical power supply by a terminal (12), and the other network (7) being powered by a mains electrical power supply by a separate terminal (13), such that the two networks are powered separately,
- all the wires of one network (6, 7) of wires being connected to the mains electrical power supply to which they belong,
- the two networks (6, 7) extending in sheets, with parallel wire portions,
- wire portions (8, 9, 10, 11) of one network (6, 7) being oriented in a direction orthogonal to that of the portions of the other network (1, 27, 28, 29),
- the two networks (6, 7) forming a comb pattern in which useful connections of one network (6) comprise parallel portions (1, 27, 28 and 29) and in which useful connections of the other network (7) comprise parallel portions (8, 9, 10, 11)) linked, by right-angle bends and return connections, to a set (38) of terminals aligned with the terminals of the read connections of the other network (6),
so as to estimate the length and the position of the deformation or of the break of the aeroplane structure, in case of the cutting of at least one of the wire portions; and,
the cut wire detector further comprising:
- a parallel connection of the conductor wires of a network,
- a microprocessor (7) and a program memory (19) measuring, successively in time, electrical potentials and/or currents available on each of the conductor wires of a network that is operating,
- a decoder (23) controlled by the microprocessor (17),
- the microprocessor (17) implementing an equivalent resistance measurement program, to deduce therefrom the position of the deterioration.

2. Aeroplane structure according to Claim 1, **characterized in that** it comprises a sheet of polytetrafluoroethylene metallized on one face, and etched in accordance with the definition of a network of wire portions.

3. Aeroplane structure according to one of Claims 1 or 2, **characterized in that** it comprises
- for a network, a single support cut into strips.

4. Aeroplane structure according to one of Claims 1 to 3, **characterized in that** the two networks are interconnected together.
